# EUROPEAN PATENT SPECIFICATION

(11) **EP 4 115 317 B1**
(45) Date of publication and mention of the grant of the patent: **12.08.2026**
(21) Application number: 20711516.3
(22) Date of filing: 03.03.2020
(51) Int. Cl.: G06F 18/21

(54) **OBJECT LOCATION INFORMATION PROVISIONING FOR AUTONOMOUS VEHICLE MANEUVERING**
BEREITSTELLUNG VON OBJEKTORTSINFORMATIONEN FÜR MANÖVER EINES AUTONOMEN FAHRZEUGS
FOURNITURE D'INFORMATIONS DE LOCALISATION D'OBJET POUR MANOEUVRE DE VÉHICULE AUTONOME

(43) Date of publication of application: 11.01.2023
(73) Proprietor: Telefonaktiebolaget LM Ericsson (PUBL), 164 83 Stockholm (SE)
(72) Inventor: CHUNDURI, Annapurna, 414 76 Göteborg (SE)
(74) Representative: Ericsson
(86) International application number: PCT/EP2020/055482
(87) International publication number: WO 2021/175411

(56) References cited:
- US-A1- 2018 365 503
- US-A1- 2019 351 896
- US-A1- 2020 018 613

## Description

### TECHNICAL FIELD

The present disclosure relates generally to the field of enabling traffic environment awareness in an autonomous vehicle. More particularly, it relates to a computer implemented method and arrangement for providing object location information to an autonomous vehicle.

### BACKGROUND

One of the most intensive researched and investigated fields in automotive industry is the field of assisted and automated driving technologies. It is expected that vehicles with driving assistance functions and even autonomous vehicles for passengers and goods transportation will have an increasingly share in daily traffic. Autonomous vehicles can sense its surroundings and perform necessary functions with minimum-to-no human intervention to manoeuver the vehicle.

An important basis for the realization of autonomous vehicles is a reliable and robust determination of position and trajectory of the vehicle. In addition to its own position, the behavior of all other traffic participants has to be observed and predicted, including the cognition of intentions and gestures of Vulnerable Road Users, VRU, e.g., pedestrians and cyclists. Reliable technologies and methods used by the autonomous vehicle to detect VRUs and other re-locatable objects are crucial to ensure safety of all those involved.

There are multiple technologies available for detecting objects, e.g., VRUs, using vehicle-implemented solutions. Such technologies comprise a use of image recognition (cameras), radar and lidar sensors. Vehicle implemented image-processing resources and algorithms are used to categorize detected objects as lanes, traffic lights, vehicles, pedestrians, etc. In combination with traffic environmental models, recognition of relevant traffic participants/re-locatable objects, e.g., VRUs, is required for modelling an accurate traffic situation.

"Sensor and object recognition technologies for self-driving cars" Mario Hirz, et al Computer-Aided Design and Applications, January 2018 discloses object detection in autonomous vehicles using sensor technology. Patent publication US 2020/0018613 A1 relates to the identification of road users.

In addition to recognition and modelling of traffic environment using the sensor of the specific autonomous vehicle, additional input may be gathered through vehicle-to-vehicle and/or infrastructure-to-vehicle communication.

Having streams of data from multiple input data sources shared with the vehicles improves safety and reliability in autonomous vehicle maneuvering, but presents a challenge to the limited processor capabilities of each autonomous vehicle. Consequently, there is a need to enable increased multi-source information provisioning for autonomous vehicle maneuvering, without increasing data processing requirements within the respective autonomous vehicle.

### SUMMARY

It is therefore an object of the present disclosure to provide a method, a computer program product, and an arrangement for object location information provisioning for autonomous vehicle maneuvering, which seeks to mitigate, alleviate, or eliminate all or at least some of the above-discussed drawbacks of presently known solutions.

This and other objects are achieved by means of a method, a computer program product, and an arrangement as defined in the appended claims. The term exemplary is in the present context to be understood as serving as an instance, example or illustration.

According to a first aspect of the present disclosure, a computer-implemented method for object location information provisioning for autonomous vehicle maneuvering is provided. The method comprises receiving a request for object location information from at least one autonomous vehicle. The method comprises retrieving vulnerable road user, VRU, data, from a plurality of VRU data sources, wherein the VRU data comprises respective VRU locations in a pre-determined surrounding of the autonomous vehicle. Further, the method comprises determining the object location information based on the retrieved VRU data. Additionally, the method comprises periodically transmitting the determined object location information to the autonomous vehicle.

Advantageously, the proposed method is used to determine the object location information, especially the VRU data using additional VRU data sources, e.g., mobile network operators, user equipments, handheld devices, wireless devices or wireless sensors. Other examples of VRU data sources comprise traffic cameras and connected wireless transport units like scooters or rental bikes. Therefore, the usage of multiple VRU data sources to determine the object location information and communicating the determined object location information to the autonomous vehicle, improves the reliability of the autonomous vehicle in taking more informed decisions based on a more comprehensive understanding of its surroundings.

The embodiments of the proposed method and arrangement is realised using an object location provisioning application. The object location provisioning application implements various modules to triangulate and to combine the VRU data retrieved from a plurality of VRU data sources to determine the object location information. Further, the object location provisioning application validates the object location information by assigning confidence levels based on overlapping information retrieved from the plurality of VRU data sources. Thus, the object location provisioning application provides additional processing capacity for performing such functions instead of increasing the processing burden within autonomous vehicle.

The object location provisioning application provides additional processing capabilities for authentication, authorization and security functionality (like data anonymization) to improve the security and trust of the autonomous vehicle, prior to provisioning the object location information to the autonomous vehicle.

Moreover, the embodiments of proposed invention can be readily implemented for public roads and for autonomous vehicles in confined spaces like industries ex- ports, logistics/distribution centers or the like.

Retrieving VRU data comprises authenticating the plurality of VRU data sources for data ingestion of VRU data and disassociating the VRU data from VRU identifying information. For example, the VRU data sources, may be authenticated by verifying the credentials associated with the VRU data sources e.g. using passwords. The VRU data sources may be authenticated using advanced authentication methods like digital certificates, e.g., using specific authentication protocols like SSL/TLS. After authentication of the VRU data sources, the VRU data is disassociated from VRU identifying information.

The proposed object location provisioning application provides additional processing capabilities for authentication, authorization and security functionality, e.g., data anonymization, to improve the security and trust of the autonomous vehicle ecosystem.

According to a second aspect of the present disclosure, there is provided a computer program product comprising a non-transitory computer readable medium, having thereon a computer program comprising program instructions, the computer program being loadable into a data processing unit and configured to cause execution of the method according to the first aspect when the computer program is run by the data processing unit.

There is provided an arrangement for provisioning object location information for autonomous vehicle maneuvering. The arrangement comprising controlling circuitry configured to receive a request for object location information from at least one autonomous vehicle. The controlling circuitry is configured to retrieve vulnerable road user, VRU, data, from a plurality of VRU data sources, wherein the VRU data comprises respective VRU locations in a pre-determined surrounding of the autonomous vehicle. Further, the controlling circuitry is configured to determine the object location information based on the retrieved VRU data. Additionally, the contolling circuitry is configured to periodically transmit the determined object location information to the autonomous vehicle. Further embodiments of the disclosure are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
- Figure 1: illustrates an autonomous vehicle in a multi-source scenario;
- Figure 2: discloses a flowchart illustrating example method steps implemented in an object location information provisioning application;
- Figure 3: is a signaling diagram illustrating an exchange of signals for the object location information provisioning application in a telecommunication network;
- Figure 4: a. discloses an object location information provisioning application in a 4G telecommunication network;
b. discloses an object location information provisioning application in a 5G telecommunication network;
- Figure 5: is a schematic block diagram illustrating an example configuration of an object location information provisioning application and its interfaces.
- Figure 6: illustrates a computing environment implementing the object location information provisioning application for autonomous vehicle maneuvering, according to an embodiment.

### DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

It will be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

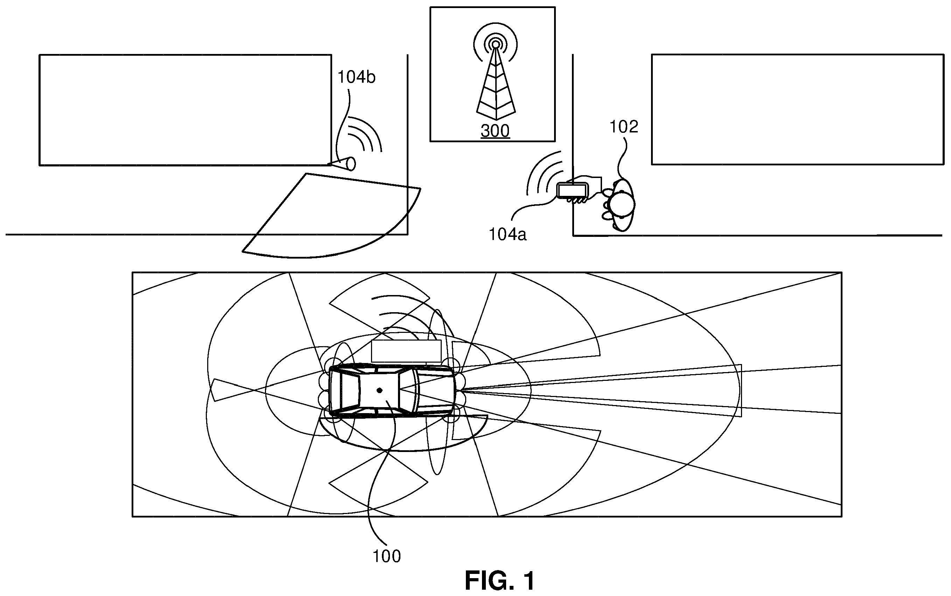

Figure 1 illustrates an autonomous vehicle 100 in a multi-source scenario in a surrounding comprising infrastructure components and vulnerable road users, VRUs, e.g., pedestrians and cyclists. In the context of the present disclosure, the term autonomous vehicle reflects a vehicle that can sense its surroundings and perform necessary functions with minimum-to-no human intervention to manoeuvre the vehicle from a starting point to a destination point. Different levels of autonomous driving has been defined and with each increasing level, the extent of the car's independence regarding decision making and vehicle control increases. Vehicles with capabilitites for autonomous maneuvering are expected to be seen in confined spaces like ports, logistics/distribution centers as well as on general public roads.

The autonomous vehicle 100 may use different technologies to be able to detect objects in its surrounding; Image Recognition (cameras), Radar sensors and LIDAR sensors. For example, Image processing algorithms are used to categorize detected objects such as lanes, traffic lights, vehicles, pedestrians. It crucial to ensure safety of all those involved especially the Vulnerable Road Users (VRUs) like pedestrians and cyclists. The local processing resources within the autonomous vehicle 100 are used to build a 3D LDMs (Local Dynamic Map) and locate/track objects.

Such a self-reliant system is important so that the autonomous vehicle 100 can act based on only its own input data for when the vehicle does not have or has poor/unreliable connectivity. But on the other hand, it limits the potential of taking advantage of connectivity and using input from other data sources to identify objects and improve the vehicles perception of the surroundings. Input from additional data sources would also enable the vehicle to make more informed decisions especially considering the limitations of current camera and sensor technology in cases of bad weather, physical damage to the devices or obstacles in the path of the VRUs. The proposed invention solves the above mentioned disadvantages by sharing anonymized object location information, retrieved from the VRU data sources 104a, 104b, e.g., by means of the telecommunication network 300, with the autonomous vehicle 100. Hence, the VRU data sources 104a, 104b act as additional sources for the autonomous vehicle 100 to identify VRUs in a pre-determined surrounding.

An arrangement which implements an object location provisioning application provides additional processing capacity for performing various functions on the obtained VRU data and VRU data source such as, authentication, ingestion, anonymization, data combining and validation. Therefore, the proposed arrangement allows determination of object location information, using VRU data retrieved from additional VRU data sources 104a, 104b, e.g., user equipments, handheld devices, wireless devices or wireless sensors, retrievable using the means of communication that has been established, e.g., by means of the telecommunication network 300. Other examples of VRU data sources comprise traffic cameras and connected wireless transport units like scooters or rental bikes. Thus, the usage of plurality of VRU data sources to determine the object location information and communicating the determined object location information to the autonomous vehicle, improves the reliability of the autonomous vehicle 100 in taking more informed decisions based on a better perception of the vehicle surroundings.

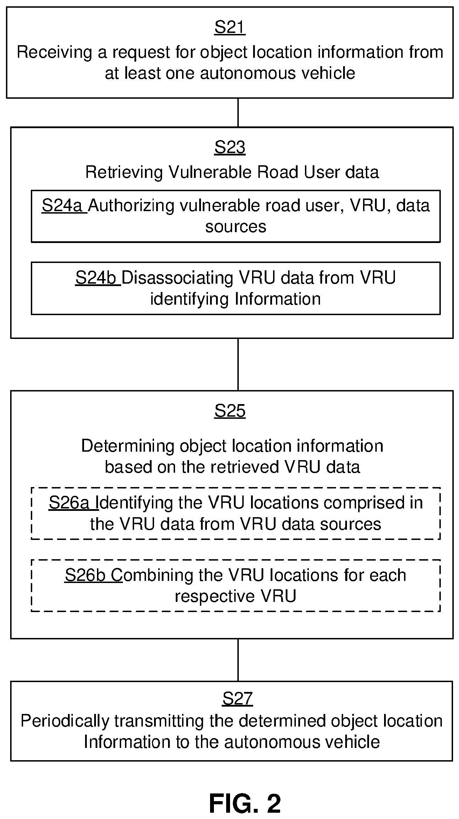

Figure 2 is a flow chart illustrating an example method steps implemented in an object location information provisioning application. At step S21, the method comprises receiving a request for object location information from at least one autonomous vehicle 100. In an embodiment, the request includes an identifier of the autonomous vehicle 100. For example, the identifier of the autonomous vehicle 100 can be an International Mobile Subscriber Identity, IMSI associated with the autonomous vehicle 100 which can be used to track or monitor the autonomous vehicle 100 and/or to perform a Vehicle-to-Everything (V2X) communication between the autonomous vehicle and a wireless communication network.

At step S23, the method comprises retrieving VRU, data, from a plurality of VRU data sources 104a, 104b, wherein the VRU data comprises respective VRU locations in a pre-determined surrounding of the autonomous vehicle 100. For example, the VRU data corresponds to data obtained from various wireless devices such as user equipments, wireless cameras, cameras on likepoles/traffic lights or the like.

The plurality of VRU data sources 104a, 104b may include one or more wireless network operators. Further, the plurality of VRU data sources 104a, 104b may include various wireless devices such as but not limited to user equipments (UEs), wireless cameras or wireless sensors.

In an embodiment, retrieving the VRU data may comprise authenticating and/or authorizing the plurality of VRU data sources 104a, 104b for data ingestion of VRU data at step S24a. For example, the VRU data sources 104a-104n, may be authenticated by verifying the credentials associated with the VRU data sources 104a-104n e.g. using passwords. The VRU data sources may be authenticated using advanced authentication methods like digital certificates, e.g., using specific authentication protocols like Secure Socket Layer, Transport Layer Security (SSL/TLS). After authentication of the VRU data sources 104a, 104b, the VRU data may be disassociated from VRU identifying information at step S24b.

At step S25, the method further comprises determining the object location information based on the retrieved VRU data and data fusion or the like to determine the object location information based on the retrieved VRU data.

In an embodiment, the VRU locations are identified in the VRU data retrieved from the plurality of VRU data sources 104a, 104b. Further, the identified VRU locations for each VRU can be combined to determined the object location information. For example, an object (such as a pedestrian) is identified from the VRU data sources 104a and 104b. The VRU location of the object is identified using the VRU data retrieved from the VRU data sources 104a and 104b. The VRU location obtained from the VRU data source 104a is combined with the VRU location obtained from the VRU data source 104b to determine the accurate location of the object. It should be noted that one or more location determination techniques or yet to be known techniques may be used to accurately determine the object location information based on the retrieved VRU data.

At step S27, the method comprises periodically transmitting the determined object location information to the autonomous vehicle 100, i.e., object location information of the detected object(s). For example, the determined object location information is transmitted to the autonomous vehicle 100 every one second. The transmission of the object location information to the autonomous vehicle 100 may be periodic or may be configurable depending on the requirements of the object location information at the autonomous vehicle 100.

In an embodiment, the determined object location information can be transmitted to the autonomous vehicle 100 by generating a report in a pre-defined format or a standard format which includes the determined object location information.

Further, the generated report with the determined object location information may be periodically transmitted to the automomous vehicle 100 (for example, every one second) over a cooperative awareness message (CAM).

The above mentioned steps can be realized or performed using an object provisioning application which can be configured to provide the object location information to the automomous vehicle 100. The object provisioning application may reside in an arrangement 200 for edge computing, e.g., an edge node comprising one or more servers. The arrangement 200 may include necessary controlling circuitry which is required to perform the method steps as described above.

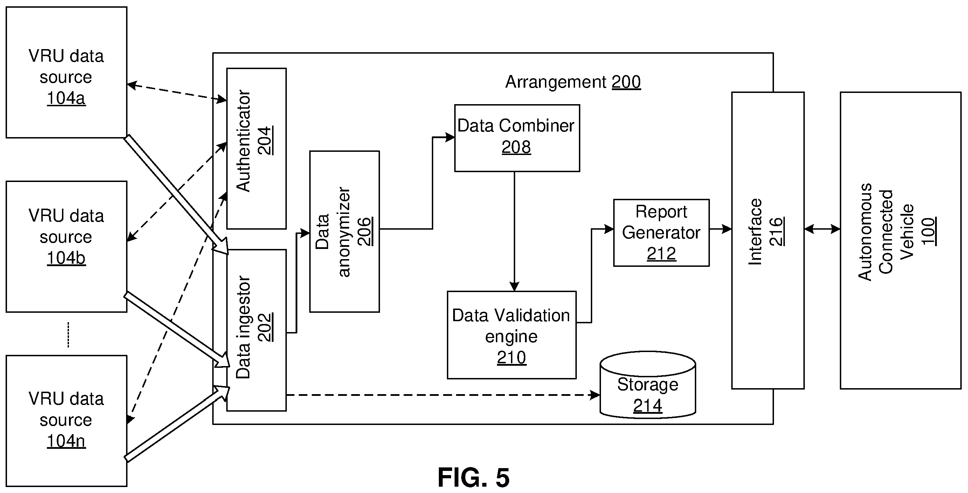

In some embodiments, the object provisioning application may reside in a cloud computing environment or a remote server configured to execute the object provisioning application in order to transmit the object location information periodically, to the autonomous vehicle 100. The arrangement 200 can include various modules which can be realized using hardware and/or software or in combination of hardware and software to perform the method steps. The functions of the various modules of the arrangement 200 are explained in conjuction with FIG 5 in the later parts of the description.

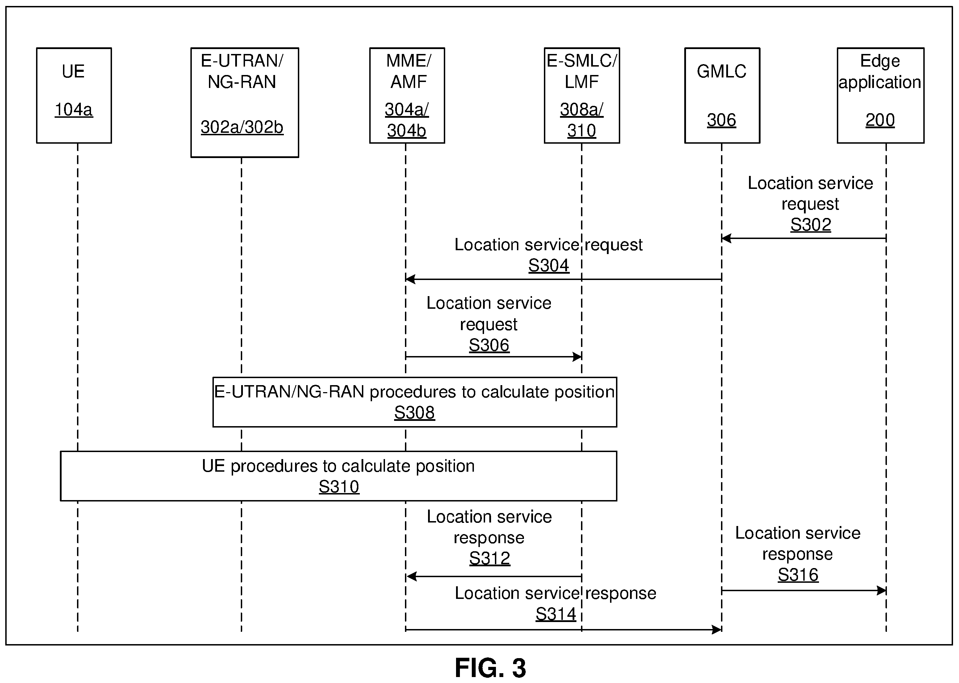

Figure 3 is a signaling diagram illustrating an exchange of signals for the object location information provisioning application in a telecommunication network 300. The object location provisioning application may be configured to interact with one or more network entitites in the telecommunication network 300 to retrieve the VRU data. For example, the telecommunication network 300 includes a plurality of network elements such as base stations i.,e., EUTRAN 302a in a 4G network and NG-RAN 302b in a 5G network, a mobility management entity, MME 304a/access and mobility Management Function, AMF 304b, a gateway mobile location center, GMLC 306 and an enhanced serving mobile location center, E-SMLC 308a/location management function, LMF 310. It should be noted that the telecommunication network may include other network entities other than the entities shown in FIG 3.

As depicted in FIG 3, the object location information provisioning application may be configured to transmit S302 a location service request to the GMLC 306 over a standard interface. The GMLC 306 transmits S304 the location service request to the MME 304a/AMF 304b. The MME 304a/AMF 304b upon receiving the location service request, transmits S306 the location service request to E-SMLC 308a/LMF 310 for processing the location service request. The E-SMLC 308a/LMF 310 processes S308 the location service request in coordination with the EUTRAN 302a/NG-RAN 302b.

The E-SMLC 308a/LMF 310 supports multiple positioning techniques which provide a different level of position accuracy. The E-SMLC 308a/LMF 310 calculates S310 the position or location information of the object based on the retrieved VRU data. Among the available network-based positioning methods, UE-assisted A-GNSS (Assisted- GNSS) positioning method over the control plane provides best accuracy (~10m to 50m) and least UE power consumption. It should be noted that, more advanced positioning methods or positioning processes (Ex: GNSS-rtk, positioning over user plane, or the like) that provides higher accuracy and better UE performance can be implemented at the E-SMLC 308a/LMF 310 for calculating the the location information of the object.

Further, the E-SMLC 308a/LMF 310 then transmits S312 location service response back to the MME 304a/AMF 304b. The MME 304a/AMF 304b in turn sends S314 the location service response to the GMLC 306 and the GMLC 306 sends S316 the the location service response to object location provisioning application 200.

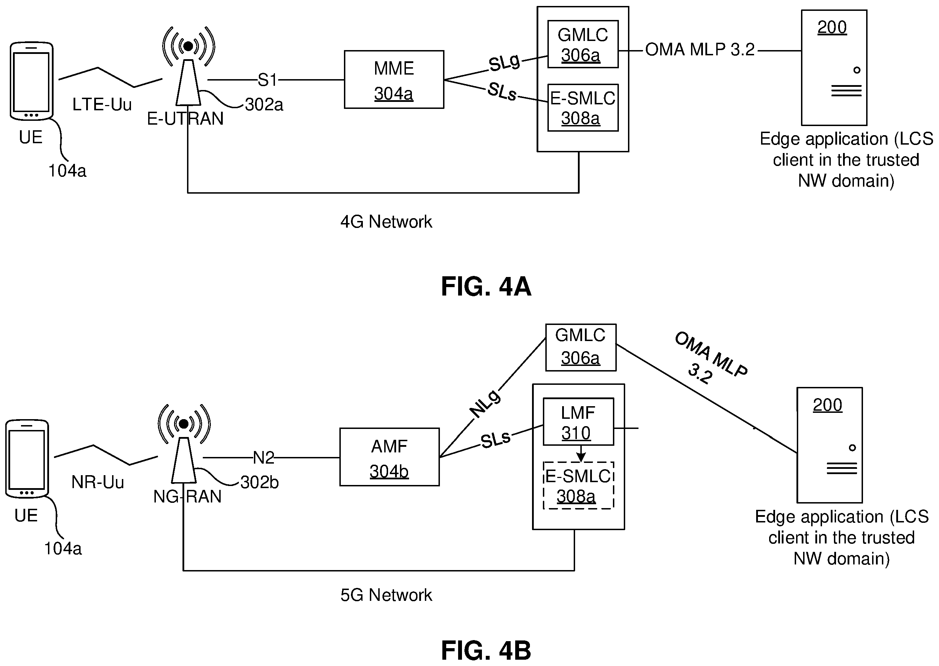

Figure 4a discloses an object location information provisioning application in a 4G telecommunication network. As depicted in FIG 4a, various entities of a 4G tecommunciation network includes the EUTRAN 302a, the MME 302a, the GMLC 306a and the E-SMLC 308a. The object location information provisioning application hosted in an arrangement 200 (for example, a server in a network domain) interacts with the 4G telecommunication network for retrieving VRU data. For example, the arrangement 200 communicates with the GMLC 306a over an Open Mobile Alliance Mobile Location Protocol, OMA MLP interface. The arrangement 200 can be configured to trigger a location service request to the GMLC 306a over the OMA MLP interface. The GMLC 306a and the E-SMLC communicates with the MME 304a over SLg and SLs interfaces respectively. Further, the MME 304a and the E-UTRAN 302a interacts with each other over S1 interface. The E-UTRAN 302a transmits control signaling to the UE 104a through LTE-Uu interface.

The MME 304a monitors the mobility of the UE 104a and transmits mobility information of the UE to the GMLC 306a and E-SMLC 308a. The E-SMLC 308a implements multiple positioning techniques to determine the location of the UE 104a. Further, the location information of the object can be determined based on the location of the UE 104a. The E-SMLC communicates the determined location of the object to the GMLC 306a and the GMLC 306a in turn communicates the location information of the object to the arrangement 200 over the OMA MLP interface as shown in FIG 4a.

In some embodiments, as defined in 3GPP 36.305 and 38.305, the request for a target UE location can be triggered by the MME 304a or by another entity in the 4G telecommunication network.

In another embodiment, the location service request can be be triggered by location information provisioning application implemented in the arrangement 200 via the GMLC over the OMA MLP interface.

Figure 4b discloses an object location information provisioning application in a 5G telecommunication network. As depicted in FIG 4b, various entities of a 5G tecommunciation network includes the NG-RAN 302B, the AMF 304b, the GMLC 306a, the E-SMLC 308a and the LMF 310. The object location information provisioning application hosted in the arrangement 200 (for example, a server in a network domain) interacts with the 5G telecommunication network for retrieving the VRU data. For example, the arrangement 200 communicates with the GMLC 306a over the OMA MLP interface. The arrangement 200 can be configured to trigger a location service request to LMF 310 over the OMA MLP interface. The GMLC 306a and the LMF 310 communicates with the AMF 304b over NLg and SLs interfaces respectively. Further, the AMF 304b and the E-UTRAN 302a interacts with each other over N2 interface. The NG-RAN 302b transmits control signaling to the UE 104a through NR-Uu interface.

The AMF 304b monitors the mobility of the UE 104a and transmits the mobility information of the UE 104a to the GMLC 306a and the LMF 310. The LMF 310 implements multiple positioning techniques to determine the location of the UE 104a. Further, the location information of the object can be determined based on the location of the UE 104a. The LMF 310 communicates the determined location of the object to the arrangement 200 over the OMA MLP interface as shown in FIG 4b.

In some embodiments, as defined in 3GPP 36.305 and 38.305, the request for a target UE location can be triggered by the MME 304a or by another entity in the 5G telecommunication network.

Figure 5 is a schematic block diagram illustrating an example configuration of an object location information provisioning application and its interfaces. The object location provisioning application is implemented (for example in an edge server) as various modules within an arrangement 200 for provisioning object location information for autonomous vehicle maneuvering, e.g., within an edge node. In the context of the present disclosure 'edge' indicates a location where the object location provisioning application is running, e.g., an edge node comprising the arrangement 200. The location of the arrangement depends on network characteristics, e.g., telecom network characteristics, and the various modules may also partly be distributed between different entities. The application will be run in a location chosen such that the data sharing from the network and other sources to the edge node and from the edge node to the autonomous vehicles satisfies latency requirements for it to serve the use case, e.g., as useful 'real-time' data. Thus, in some examples, the edge server is located as close as possible to the VRU data source and where the autonomous vehicle operates, e.g., in the Mobile Network Operator, MNO, infrastructure close to the roads to reduce latency and offload processing from the vehicle to the edge application. Moreover, introducing the edge application in the MNOs infrastructure would enable secure provisioning of object location information over MNOs 4G or 5G network. Also, arranging the edge application in the MNOs infrastructure enables the application to use standardized APIs to capture some of the data required from the telecom network.

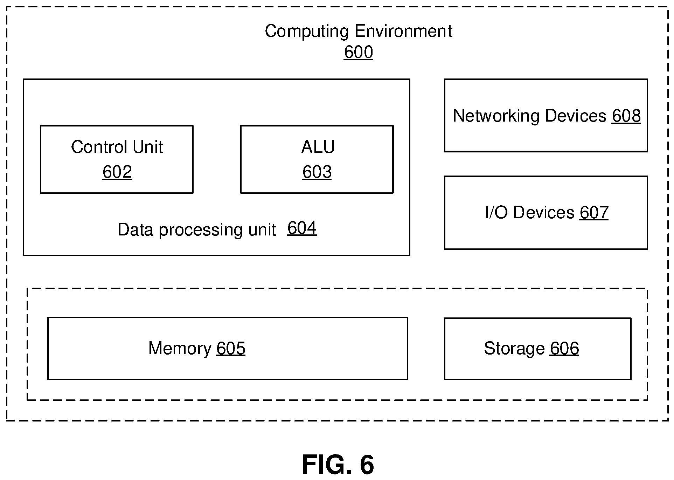

The arrangement 200 for provisioning object location information for autonomous vehicle maneuvering comprises controlling circuitry e.g., as illustrated in Figure 6.

The controlling circuitry is configured to receive a request for object location information from at least one vehicle. The controlling circuitry is further configured to retrieve vulnerable road user, VRU, data, from at plurality of VRU data sources 104a-104n, wherein the VRU data comprises respective VRU location in a predetermined surrounding of the autonomous vehicle.

The controlling circuitry is also configured to determine the object location information based on the retrieved VRU data, and to periodically transmit the determined object location information to the autonomous vehicle.

In an embodiment, the arrangement 200, e.g., the controlling circuitry of the arrangement, comprises a data ingestor 202, an authenticator 204, a data anonymizer 206, a data combiner 208, a data validation engine 210, a report generator, a storage 214 and an interface 216.

In some embodiments, the VRU data sources 104a-104n may be authenticated by the authenticator 204 for data ingestion of VRU data through the data ingestor 202. The authentication of the VRU data sources 104-104n may include verifying credentials of the VRU data sources 104a-104n. The most basic authentication method would be using passwords. More advanced authentication methods like digital certificates are preferred using specific authentication protocols like SSL/TLS, as earlier mentioned.

Thus, upon successful authentication of the VRU data sources 104a-104n by the authenticator 204, the controlling circuitry, e.g., the data ingestor 202, may be configured to retrieve VRU data from a plurality of VRU data sources 104a-104n, i.e., once authenticated, the VRU data sources can send the data to the data ingestion layer provided by the data ingestor. For some VRU data sources, a request needs to be sent (one-time or periodically) to trigger data collection. E.g. IMSIs (unique UE identifiers) of phones for which location data is to be collected by the telecom N/W is to be sent over the OMA MLP 3.2 interface (open and standardized) to the GMLC system in the telecom N/W (4G and 5G) as explained with reference to Figures 4a and b. Such request clients are implemented in the data ingestion layer. Thus, the data input to the data ingestor is from multiple sources and comprises VRU location, e.g., location as defined in a global standardized format such as World Geodetic System 1984, WGS84, timestamp and other additional data such as direction, speed, object type, etc. The VRU data includes each VRU location in a pre-determined surrounding of the autonomous vehicle. For example, the pre-determined surrounding of the autonomous vehicle 100 may include a distance ranging from 50 meters-100 meters or the like. The data ingestor 202 may be configured to disassociate the VRU data from VRU identifying information when retrieving the VRU data.

In some embodiments, the controlling circuitry, e.g., the data ingestor 202, may be configured to determine the VRU locations comprised in the VRU data retrieved from the plurality of VRU data sources. Further, the data ingestor 202 may be configured to store the VRU data stored over time in a storage. The VRU data stored in the storage 214 may be used to understand and/or device important characteristics of VRU movement patterns along the path of the autonomous vehicle. The VRU data combined together with other data like road accident zones, school zones, etc. may be used to improve the knowledge of surroundings of an autonomous vehicle 100.

The controlling circuitry, e.g., by means of the data anonymizer 206, may be configured to anonymize user specific information from the VRU data retrieved from the telecommunication network or the mobile network operators. Data anonymization is required for data from sources that contain sensitive user information. This step is either performed by the VRU data source itself (remove/mask sensitive information, assign temporary identities, IDs, to send towards the edge application, etc), or performed by the edge application depending on the deployment model. For example, the data anonymizer 206 may be configured to anonymize the user specific information by removing International Mobile Subscriber Identity, IMSI from the VRU data. Further, the data anonymizer 206 may maintain a mapping of network identifiers (i.e., user IDs) to an application-assigned user IDs to differentiate the data for different users.

The controlling circuitry, e.g., by means of the data combiner 208, may further be configured to combine the VRU locations for each respective VRU. Data may be sent to the data combiner, i.e., a data fusion component, that will Convert the location input in the data to a single standard format, e.g., WGS84, and fuse data from multiple sources together for each time period of collection (every second). For example, the data combiner 208 can be configured to implement data fusion by combining the VRU locations retrieved from the plurality of VRU data sources 104a-104n, e.g., wireless devices such as user equipments 104a, wireless cameras and wireless sensors for which data is retrievable by means of the wireless network. Other examples of data sources comprises traffic cameras and connected wireless transport units like scooters or rental bikes. For example, the data combiner 208 can be configured to combine the data from the plurality of VRU data sources together for a time period of every second. Further, the data combiner 208 can be configured to perform one or more actions on the VRU data which includes converting the VRU data into a standard format, compressing the VRU data, extracting the VRU data or the like.

In some embodiments, the data combiner 208 may be configured to data fusion of the VRU data retrieved from the plurality of VRU data sources 104a-104n in a data validation engine 210 to detect the VRUs with different levels of accuracy. For example, the data combiner 208 may be configured for data fusion of data points corresponding to a same object detected by the plurality of VRU data sources 104a-104n (when necessary and feasible) in order to improve the accuracy of the data.

The controlling circuitry, e.g., by means of the data validation engine 210, may be configured to validate the object location information by analyzing the VRU locations in the VRU data . The data validation engine 210 can be configured to determine that the plurality of VRU data sources are detecting same object. For example, the data validation engine 210 can be configured to perform data fusion of data points corresponding to a same object detected by the plurality of VRU data sources 104a-104n (when necessary and feasible) in order to improve the accuracy of the data. Additionally, any duplicate data points observed during data fusion of the data and confirmed to be belonging to the same object can be filtered to improve the determination of object location information.

The data validation engine 210 may also be configured to detect data points belonging to the detected object identified by the plurality of VRU data sources. Further, the data validation engine 210 can be configured to identify redundant data points of the object detected by the plurality of VRU data sources. Furthermore, the data validation engine 210 can be configured to assign confidence levels based on overlapping information from the plurality of VRU data sources and the data validation engine 210 can be configured to validate the object location information using the assigned confidence levels.

The controlling circuitry, e.g., by means of the report generator 212, may further be configured to generate a report with the determined object location information in a pre-defined format or a standard format. The generated report with the determined object location information is periodically transmitted to the automomous vehicle 100 (for example, every one second) using a cooperative awareness message (CAM) over the interface 216. The interface 216 can be a standard interface, e.g., standardized 3GPP or ETSI defined interface. The reporting generator is responsible for generating messages as per the standardized format with basic information - location data points of VRUs- and possible additional information like speed of motion of the VRU, VRU type (cyclist, pedestrian, etc), direction of motion, predicted direction, etc. It will then send standardized messages over a standardized interface to the connected autonomous vehicles. The report that is being considered today is a generic report for the entire 'area' that is of interest (e.g. where autonomous vehicles can operate). The same report may be sent to each vehicle. In the future, the solution can evolve to sending more personalized messages to each connected vehicle based on the vehicle's speed, location, circular area around the vehicle that is of immediate interest for it, etc. This information is to be collected via the standardized interface.

FIG 6 illustrates a computing environment 600 implementing the object location information provisioning application for autonomous vehicle 100 maneuvering, according to an embodiment. As depicted the computing environment 600 comprises at least one data processing unit 604 that is equipped with a control unit 602 and an Arithmetic Logic Unit (ALU) 603, a memory 605, a storage unit 606, plurality of networking devices 608 and a plurality Input output (I/O) devices 607. The data processing unit 604 is responsible for processing the instructions of the algorithm. The data processing unit 604 receives commands from the control unit in order to perform its processing. Further, any logical and arithmetic operations involved in the execution of the instructions are computed with the help of the ALU 603.

The overall computing environment 600 can be composed of multiple homogeneous and/or heterogeneous cores, multiple CPUs of different kinds, special media and other accelerators. The data processing unit 604 is responsible for processing the instructions of the algorithm. Further, the plurality of data processing units 604 may be located on a single chip or over multiple chips.

The algorithm comprising of instructions and codes required for the implementation are stored in either the memory 605 or the storage 606 or both. At the time of execution, the instructions may be fetched from the corresponding memory 605 and/or storage 606, and executed by the data processing unit 604.

In case of any hardware implementations various networking devices 608 or external I/O devices 607 may be connected to the computing environment to support the implementation through the networking devices 608 and the I/O devices 607.

The embodiments disclosed herein can be implemented through at least one software program running on at least one hardware device and performing network management functions to control the elements. The elements shown in Fig. 6 include blocks which can be at least one of a hardware device, or a combination of hardware device and software module.

It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

## Claims

1. A computer-implemented method of an object provisioning application performed by an arrangement (200) for object location information provisioning for autonomous vehicle (100) maneuvering, the method comprising:
receiving (S21) a request for object location information from at least one autonomous vehicle (100);
retrieving (S23) vulnerable road user, VRU, data, from a plurality of VRU data sources (104a-104n), at least some of the VRU data being associated with a User Equipment, UE, in a telecommunications network (300), wherein the UE is associated with an International Mobile Subscriber Identity, IMSI, wherein the VRU data comprises respective VRU locations in a pre-determined surrounding of the autonomous vehicle (100) wherein retrieving VRU data comprises:
authenticating (S24a) the plurality of VRU data sources (104a-104n) for data ingestion of VRU data; and
disassociating (S24b) the VRU data from VRU identifying information, by removing the IMSI from the VRU data and assigning a temporary identifier to the UE;
determining (S25) the object location information based on the retrieved VRU data, wherein determining object location information comprises:
identifying (S26a) the VRU locations comprised in the VRU data from the plurality of VRU data sources (104a-104n);
combining (S26b) the VRU locations for each respective VRU; and
periodically (S27) transmitting the determined object location information to the autonomous vehicle (100).

2. The computer-implemented method according to claim 1, wherein the request comprises an identifier of the at least one autonomous vehicle (100).

3. The computer-implemented method according to any preceding claim, wherein the plurality of VRU data sources (104a-104n) comprises one or more mobile network operators and wherein VRU data corresponds to wireless device data.

4. The computer-implemented method according to claim 1 - 3, wherein the plurality of VRU data sources (104a-104n) additionally comprises wireless devices, wireless cameras or wireless sensors.

5. The computer-implemented method according to any preceding claim, wherein the method comprises anonymizing user specific information from the VRU data retrieved from the one or more mobile network operators (300).

6. The computer-implemented method according to any preceding claim, wherein the method comprises validating the object location information by:
determining that the plurality of VRU data sources (104a-104n) are detecting same object;
detecting data points belonging to the detected object identified by the plurality of VRU data sources (104a-104n);
identifying redundant data points of the object detected by the plurality of VRU data sources (104a-104n);
assigning confidence levels based on overlapping information from the plurality of VRU data sources (104a-104n);
validating the object location information using the assigned confidence levels; and
the validating being perfomed before transmitting the determined object location information to the autonomous vehicle (100).

7. The computer-implemented method according to any preceding claim, wherein the method comprises generating a report in a pre-defined format with the determined object location information.

8. The computer-implemented method according to claim 7, wherein the generated report with the determined object location information is periodically transmitted to the autonomous vehicle over a cooperative awareness message, CAM.

9. A computer program product comprising a non-transitory computer readable medium (800), having thereon a computer program comprising program instructions, the computer program being loadable into a data processing unit and configured to cause execution of the method according to any of claims 1 through 8 when the computer program is run by the data processing unit.

10. An arrangement (200) of an object provisioning application for object location information provisioning for autonomous vehicle (100) maneuvering, the arrangement comprising controlling circuitry configured to:
receive (S21) a request for object location information from at least one autonomous vehicle (100);
retrieve (S23) vulnerable road user, VRU, data, from a plurality of VRU data sources (104a-104n), at least some of the VRU data being associated with a User Equipment, UE, in a telecommunications network (300), wherein the UE is associated with an International Mobile Subscriber Identity, IMSI, wherein the VRU data comprises respective VRU locations in a pre-determined surrounding of the autonomous vehicle (100), wherein retrieving VRU data comprises:
authenticate (S24a) the plurality of VRU data sources (104a-104n) for data ingestion of VRU data; and
disassociate (S24b) the VRU data from VRU identifying information, by removing the IMSI, from the VRU data and assigning a temporary identifier to the UE;
determine (S25) the object location information based on the retrieved VRU data, wherein determining object location information comprises:
identifying (S26a) the VRU locations comprised in the VRU data from the plurality of VRU data sources (104a-104n);
combining (S26b) the VRU locations for each respective VRU; and
periodically (S27) transmit the determined object location information to the autonomous vehicle (100).

11. The arrangement according to claim 10, wherein the request comprises an identifier of the at least one autonomous vehicle (100).

12. The arrangement according to any of claims 10 or 11, wherein the plurality of VRU data sources (104a-104n) comprises one or more mobile network operators and wherein VRU data corresponds to wireless device data.

13. The arrangement according to any of claims 10 - 12, wherein the plurality of VRU data sources (104a-104n) additionally comprises wireless devices, wireless cameras or wireless sensors.

14. The arrangement according to any preceding claims 10 - 13, wherein the controlling circuitry is configured to anonymize user specific information from the VRU data retrieved from the one or more mobile network operators (300).

15. The arrangement according to any preceding claims 10 - 14, wherein the controlling circuitry is configured to validate the object location information by:
determining that the plurality of VRU data sources (104a-104n) are detecting same object;
detecting data points belonging to the detected object identified by the plurality of VRU data sources (104a-104n);
identifying redundant data points of the object detected by the plurality of VRU data sources (104a-104n);
assigning confidence levels based on overlapping information from the plurality of VRU data sources (104a-104n);
validating the object location information using the assigned confidence levels; and
the validating being perfomed before transmitting the determined object location information to the autonomous vehicle (100).

## Patentansprüche

1. Computerimplementiertes Verfahren einer Objektbereitstellungsanwendung, das von einer Anordnung (200) zur Objektstandortinformationsbereitstellung zum Manövrieren autonomer Fahrzeuge (100) durchgeführt wird, wobei das Verfahren Folgendes umfasst:
Empfangen (S21) einer Anforderung für Objektstandortinformationen von mindestens einem autonomen Fahrzeug (100);
Abrufen (S23) von Daten gefährdeter Verkehrsteilnehmer, VRU, von einer Mehrzahl von VRU-Datenquellen (104a-104n), wobei zumindest einige der VRU-Daten mit einer Benutzereinrichtung, UE, in einem Telekommunikationsnetzwerk (300) assoziiert sind, wobei die UE mit einer internationalen Mobilfunkteilnehmeridentität, IMSI, assoziiert ist, wobei die VRU-Daten jeweilige VRU-Standorte in einer vorbestimmten Umgebung des autonomen Fahrzeugs (100) umfassen, wobei das Abrufen von VRU-Daten Folgendes umfasst:
Authentifizieren (S24a) der Mehrzahl von VRU-Datenquellen (104a-104n) zur Datenaufnahme von VRU-Daten; und
Trennen (S24b) der VRU-Daten von VRU-Identifizierungsinformationen durch Entfernen der IMSI aus den VRU-Daten und Zuweisen einer temporären Kennung zu der UE;
Bestimmen (S25) der Objektstandortinformationen basierend auf den abgerufenen VRU-Daten, wobei das Bestimmen der Objektstandortinformationen Folgendes umfasst:
Identifizieren (S26a) der VRU-Standorte, die in den VRU-Daten umfasst sind, aus der Mehrzahl von VRU-Datenquellen (104a-104n);
Kombinieren (S26b) der VRU-Standorte für jeden jeweiligen VRU; und
periodisches Senden (S27) der bestimmten Objektstandortinformationen an das autonome Fahrzeug (100) .

2. Computerimplementiertes Verfahren nach Anspruch 1, wobei die Anforderung eine Kennung des mindestens einen autonomen Fahrzeugs (100) umfasst.

3. Computerimplementiertes Verfahren nach einem der vorhergehenden Ansprüche, wobei die Mehrzahl von VRU-Datenquellen (104a-104n) einen oder mehrere Mobilfunknetzwerkbetreiber umfasst und wobei die VRU-Daten Daten drahtloser Vorrichtungen entsprechen.

4. Computerimplementiertes Verfahren nach einem der Ansprüche 1-3, wobei die Mehrzahl von VRU-Datenquellen (104a-104n) außerdem drahtlose Vorrichtungen, drahtlose Kameras oder drahtlose Sensoren umfasst.

5. Computerimplementiertes Verfahren nach einem der vorhergehenden Ansprüche, wobei das Verfahren Anonymisieren benutzerspezifischer Informationen aus den VRU-Daten umfasst, die von dem einen oder den mehreren Mobilfunknetzwerkbetreibern (300) abgerufen werden.

6. Computerimplementiertes Verfahren nach einem der vorhergehenden Ansprüche, wobei das Verfahren Validieren der Objektstandortinformationen durch Folgendes umfasst:
Bestimmen, dass die Mehrzahl von VRU-Datenquellen (104a-104n) dasselbe Objekt erkennt;
Erkennen von Datenpunkten, die zu dem erkannten Objekt gehören, das von der Mehrzahl von VRU-Datenquellen (104a-104n) identifiziert wird;
Identifizieren redundanter Datenpunkte des Objekts, das von der Mehrzahl von VRU-Datenquellen (104a-104n) erkannt wird;
Zuweisen von Vertrauensgraden basierend auf sich überschneidenden Informationen von der Mehrzahl von VRU-Datenquellen (104a-104n);
Validieren der Objektstandortinformationen unter Verwendung der zugewiesenen Vertrauensgrade; und
wobei das Validieren vor dem Senden der bestimmten Objektstandortinformationen an das autonome Fahrzeug (100) durchgeführt wird.

7. Computerimplementiertes Verfahren nach einem der vorhergehenden Ansprüche, wobei das Verfahren Erstellen eines Berichts in einem vordefinierten Format mit den bestimmten Objektstandortinformationen umfasst.

8. Computerimplementiertes Verfahren nach Anspruch 7, wobei der erstellte Bericht mit den bestimmten Objektstandortinformationen über eine Cooperative-Awareness-Nachricht, CAM, periodisch an das autonome Fahrzeug gesendet wird.

9. Computerprogrammprodukt, umfassend ein nichtflüchtiges computerlesbares Medium (800), das ein Computerprogramm darauf aufweist, das Programmanweisungen umfasst, wobei das Computerprogramm in eine Datenverarbeitungseinheit geladen werden kann und so ausgelegt ist, dass es die Ausführung des Verfahrens nach einem der Ansprüche 1 bis 8 bewirkt, wenn das Computerprogramm von der Datenverarbeitungseinheit ausgeführt wird.

10. Anordnung (200) einer Objektbereitstellungsanwendung zur Objektstandortinformationsbereitstellung zum Manövrieren autonomer Fahrzeuge (100), wobei die Anordnung Steuerschaltungsanordnung umfasst, die zu Folgendem ausgelegt ist:
Empfangen (S21) einer Anforderung für Objektstandortinformationen von mindestens einem autonomen Fahrzeug (100);
Abrufen (S23) von Daten gefährdeter Verkehrsteilnehmer, VRU, von einer Mehrzahl von VRU-Datenquellen (104a-104n), wobei zumindest einige der VRU-Daten mit einer Benutzereinrichtung, UE, in einem Telekommunikationsnetzwerk (300) assoziiert sind, wobei die UE mit einer internationalen Mobilfunkteilnehmeridentität, IMSI, assoziiert ist, wobei die VRU-Daten jeweilige VRU-Standorte in einer vorbestimmten Umgebung des autonomen Fahrzeugs (100) umfassen, wobei das Abrufen von VRU-Daten Folgendes umfasst:
Authentifizieren (S24a) der Mehrzahl von VRU-Datenquellen (104a-104n) zur Datenaufnahme von VRU-Daten; und
Trennen (S24b) der VRU-Daten von VRU-Identifizierungsinformationen durch Entfernen der IMSI aus den VRU-Daten und Zuweisen einer temporären Kennung zu der UE;
Bestimmen (S25) der Objektstandortinformationen basierend auf den abgerufenen VRU-Daten, wobei das Bestimmen der Objektstandortinformationen Folgendes umfasst:
Identifizieren (S26a) der VRU-Standorte, die in den VRU-Daten umfasst sind, aus der Mehrzahl von VRU-Datenquellen (104a-104n);
Kombinieren (S26b) der VRU-Standorte für jeden jeweiligen VRU; und
periodisches Senden (S27) der bestimmten Objektstandortinformationen an das autonome Fahrzeug (100) .

11. Anordnung nach Anspruch 10, wobei die Anforderung eine Kennung des mindestens einen autonomen Fahrzeugs (100) umfasst.

12. Anordnung nach einem der Ansprüche 10 oder 11, wobei die Mehrzahl von VRU-Datenquellen (104a-104n) einen oder mehrere Mobilfunknetzwerkbetreiber umfasst und wobei die VRU-Daten Daten drahtloser Vorrichtungen entsprechen.

13. Anordnung nach einem der Ansprüche 10-12, wobei die Mehrzahl von VRU-Datenquellen (104a-104n) außerdem drahtlose Vorrichtungen, drahtlose Kameras oder drahtlose Sensoren umfasst.

14. Anordnung nach einem der vorhergehenden Ansprüche 10-13, wobei die Steuerschaltungsanordnung dazu ausgelegt ist, benutzerspezifische Informationen aus den VRU-Daten, die von dem einen oder den mehreren Mobilfunknetzwerkbetreibern (300) abgerufen werden, zu anonymisieren.

15. Anordnung nach einem der vorhergehenden Ansprüche 10-14, wobei die Steuerschaltungsanordnung dazu ausgelegt ist, die Objektstandortinformationen durch Folgendes zu validieren:
Bestimmen, dass die Mehrzahl von VRU-Datenquellen (104a-104n) dasselbe Objekt erkennt;
Erkennen von Datenpunkten, die zu dem erkannten Objekt gehören, das von der Mehrzahl von VRU-Datenquellen (104a-104n) identifiziert wird;
Identifizieren redundanter Datenpunkte des Objekts, das von der Mehrzahl von VRU-Datenquellen (104a-104n) erkannt wird;
Zuweisen von Vertrauensgraden basierend auf sich überschneidenden Informationen von der Mehrzahl von VRU-Datenquellen (104a-104n);
Validieren der Objektstandortinformationen unter Verwendung der zugewiesenen Vertrauensgrade; und
wobei das Validieren vor dem Senden der bestimmten Objektstandortinformationen an das autonome Fahrzeug (100) durchgeführt wird.

## Revendications

1. Procédé mis en œuvre par ordinateur d'une application de fourniture d'objet réalisé par un agencement (200) de fourniture d'informations de localisation d'objet pour une manœuvre de véhicule autonome (100), le procédé comprenant :
la réception (S21) d'une demande d'informations de localisation d'objet depuis au moins un véhicule autonome (100) ;
la récupération (S23) de données d'usagers vulnérables de la route, VRU, à partir d'une pluralité de sources de données VRU (104a-104n), au moins certaines des données VRU étant associées à un équipement utilisateur, UE, dans un réseau de télécommunication (300), dans lequel l'UE est associé à une identité d'abonné mobile internationale, IMSI, dans lequel les données VRU comprennent des emplacements VRU respectifs dans un environnement prédéterminé du véhicule autonome (100), dans lequel la récupération de données VRU comprend :
l'authentification (S24a) de la pluralité de sources de données VRU (104a-104n) pour l'intégration de données de données VRU ; et
la dissociation (S24b) des données VRU d'informations d'identification VRU, en supprimant l'IMSI des données VRU et en attribuant un identifiant temporaire à l'UE ;
la détermination (S25) des informations de localisation d'objet sur la base des données VRU récupérées, dans lequel la détermination des informations de localisation d'objet comprend :
l'identification (S26a) des emplacements VRU compris dans les données VRU provenant de la pluralité de sources de données VRU (104a-104n) ;
la combinaison (S26b) des emplacements VRU pour chaque VRU respective ; et
la transmission périodique (S27) des informations de localisation d'objet déterminées au véhicule autonome (100).

2. Procédé mis en œuvre par ordinateur selon la revendication 1, dans lequel la demande comprend un identifiant de l'au moins un véhicule autonome (100).

3. Procédé mis en œuvre par ordinateur selon l'une quelconque des revendications précédentes, dans lequel la pluralité de sources de données VRU (104a-104n) comprend un ou plusieurs opérateurs de réseaux mobiles et dans lequel des données VRU correspondent à des données de dispositif sans fil.

4. Procédé mis en œuvre par ordinateur selon l'une quelconque des revendications 1 à 3, dans lequel la pluralité de sources de données VRU (104a-104n) comprend en outre des dispositifs sans fil, des caméras sans fil ou des capteurs sans fil.

5. Procédé mis en œuvre par ordinateur selon l'une quelconque des revendications précédentes, dans lequel le procédé comprend l'anonymisation d'informations spécifiques à l'utilisateur à partir des données VRU récupérées des un ou plusieurs opérateurs de réseaux mobiles (300).

6. Procédé mis en œuvre par ordinateur selon l'une quelconque des revendications précédentes, dans lequel le procédé comprend la validation des informations de localisation d'objet par :
la détermination que la pluralité de sources de données VRU (104a-104n) détectent le même objet ;
la détection de points de données appartenant à l'objet détecté identifié par la pluralité de sources de données VRU (104a-104n) ;
l'identification de points de données redondants de l'objet détecté par la pluralité de sources de données VRU (104a-104n) ;
l'attribution de niveaux de confiance sur la base d'informations de chevauchement provenant de la pluralité de sources de données VRU (104a-104n) ;
la validation des informations de localisation d'objet à l'aide des niveaux de confiance attribués ; et
la validation étant réalisée avant la transmission des informations de localisation d'objet déterminées au véhicule autonome (100).

7. Procédé mis en œuvre par ordinateur selon l'une quelconque des revendications précédentes, dans lequel le procédé comprend la génération d'un rapport dans un format prédéfini avec les informations de localisation d'objet déterminées.

8. Procédé mis en œuvre par ordinateur selon la revendication 7, dans lequel le rapport généré avec les informations de localisation d'objet déterminées est transmis périodiquement au véhicule autonome dans un message de sensibilisation coopérative, CAM.

9. Produit de programme informatique comprenant un support non transitoire lisible par ordinateur (800) sur lequel est stocké un programme informatique comprenant des instructions de programme, le programme informatique pouvant être chargé dans une unité de traitement de données et étant configuré pour provoquer une exécution du procédé selon l'une quelconque des revendications 1 à 8 lorsque le programme informatique est exécuté par l'unité de traitement de données.

10. Agencement (200) d'une application de fourniture d'objet afin de fournir des informations de localisation d'objet pour une manœuvre de véhicule autonome (100), l'agencement comprenant une circuiterie de commande configurée pour :
recevoir (S21) une demande d'informations de localisation d'objet depuis au moins un véhicule autonome (100) ;
récupérer (S23) des données d'usagers vulnérables de la route, VRU, à partir d'une pluralité de sources de données VRU (104a-104n), au moins certaines des données VRU étant associées à un équipement utilisateur, UE, dans un réseau de télécommunication (300), dans lequel l'UE est associé à une identité d'abonné mobile internationale, IMSI, dans lequel les données VRU comprennent des emplacements VRU respectifs dans un environnement prédéterminé du véhicule autonome (100), dans lequel la récupération de données VRU comprend :
l'authentification (S24a) de la pluralité de sources de données VRU (104a-104n) pour l'intégration de données de données VRU ; et
la dissociation (S24b) des données VRU d'informations d'identification VRU, en supprimant l'IMSI des données VRU et en attribuant un identifiant temporaire à l'UE ;
déterminer (S25) les informations de localisation d'objet sur la base des données VRU récupérées, dans lequel la détermination des informations de localisation d'objet comprend :
l'identification (S26a) des emplacements VRU compris dans les données VRU provenant de la pluralité de sources de données VRU (104a-104n) ;
la combinaison (S26b) des emplacements VRU pour chaque VRU respective ; et
la transmission périodique (S27) des informations de localisation d'objet déterminées au véhicule autonome (100).

11. Agencement selon la revendication 10, dans lequel la demande comprend un identifiant de l'au moins un véhicule autonome (100)

12. Agencement selon l'une quelconque des revendications 10 ou 11, dans lequel la pluralité de sources de données VRU (104a-104n) comprend un ou plusieurs opérateurs de réseaux mobiles et dans lequel des données VRU correspondent à des données de dispositif sans fil.

13. Agencement selon l'une quelconque des revendications 10 à 12, dans lequel la pluralité de sources de données VRU (104a-104n) comprend en outre des dispositifs sans fil, des caméras sans fil ou des capteurs sans fil.

14. Agencement selon l'une quelconque des revendications 10 à 13, dans lequel la circuiterie de commande est configurée pour anonymiser des informations spécifiques à l'utilisateur à partir des données VRU récupérées des un ou plusieurs opérateurs de réseaux mobiles (300).

15. Agencement selon l'une quelconque des revendications 10 à 14, dans lequel la circuiterie de commande est configurée pour valider les informations de localisation d'objet par :
la détermination que la pluralité de sources de données VRU (104a-104n) détectent le même objet ;
la détection de points de données appartenant à l'objet détecté identifié par la pluralité de sources de données VRU (104a-104n) ;
l'identification de points de données redondants de l'objet détecté par la pluralité de sources de données VRU (104a-104n) ;
l'attribution de niveaux de confiance sur la base d'informations de chevauchement provenant de la pluralité de sources de données VRU (104a-104n) ;
la validation des informations de localisation d'objet à l'aide des niveaux de confiance attribués ; et
la validation étant réalisée avant la transmission des informations de localisation d'objet déterminées au véhicule autonome (100).
